# EUROPEAN PATENT APPLICATION

(11) **EP 4 826 606 A1**
(43) Date of publication of application: **21.10.2026**
(21) Application number: 24904040.3
(22) Date of filing: 21.11.2024
(51) Int. Cl.: G06N 20/20, B01D 61/54

(54) **METHOD AND DEVICE FOR PREDICTING LITHIUM CONCENTRATION BASED ON ARTIFICIAL INTELLIGENCE**

(30) Priority: 12.12.2023 KR 20230179451
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: LEE, Sihwa, Seoul 07542 (KR); KIM, Kyunghoon, Pohang-si, Gyeongsangbuk-do 37645 (KR); KIM, Hye Jeong, Pohang-si, Gyeongsangbuk-do 37673 (KR); KIM, Dong Soo, Pohang-si, Gyeongsangbuk-do 37671 (KR); SEO, Bae Mun, Pohang-si, Gyeongsangbuk-do 37638 (KR); WI, Jin Yeop, Pohang-si, Gyeongsangbuk-do 37669 (KR)
(74) Representative: Pfenning, Meinig & Partner mbB
(86) International application number: PCT/KR2024/018443
(87) International publication number: WO 2025/127474

(57) **Abstract**

An AI-based lithium concentration prediction method according to an embodiment includes: a cleaning step of obtaining a plurality of first variables through preprocessing of a plurality of initial variables used in electrodialysis equipment for producing lithium; a preprocessing step of inputting the plurality of first variables into a boosting-based AI model to perform preprocessing and obtaining final variables; and predicting the lithium concentration by inputting the final variables into the boosting-based AI model.

## Description

### [TECHNICAL FIELD]

The present invention relates to an AI-based lithium concentration prediction method and apparatus, and more particularly to an AI-based lithium concentration prediction method and apparatus for predicting a lithium concentration using minimal variables by using artificial intelligence.

### [BACKGROUND ART]

BiPolar ElectroDialysis BPED is one of the electro-separation processes, and is used to separate or concentrate specific ions in a solution using an ion exchange material. BPED is particularly in the spotlight as an important water separation and regeneration technology.

BPED operation data may include various data collected during the operation process of the technology. BPED operation data may include, for example, current and voltage data, material concentration data, temperature and pressure data, and time data.

In order to improve BPED operation, which is operated based on experience, and to improve the productivity of lithium Li, a model that predicts the produced lithium concentration based on the operation data is required. The prediction results may be utilized for control or optimization of the production process.

### [DISCLOSURE OF INVENTION]

### [TECHNICAL PROBLEM]

An embodiment of the present invention provides an AI-based lithium concentration prediction method and apparatus that effectively predicts lithium concentration with minimal variables by applying a boosting-based AI model in a preprocessing process, performing a first preprocessing of variables based on the importance of each variable according to permutation importance, and performing a second preprocessing of variables based on Mean Absolute Percentage Error MAPE.

### [TECHNICAL SOLUTION]

Among embodiments, an AI-based lithium concentration prediction method includes: a cleaning step for obtaining a plurality of first variables through preprocessing of a plurality of initial variables used in electrodialysis equipment for producing lithium; a preprocessing step for inputting the plurality of first variables into a boosting-based AI model to perform preprocessing and for obtaining final variables; and a predicting step for predicting a concentration of the lithium by inputting the final variables into the boosting-based AI model.

The cleaning step may include a data cleaning step for removing missing values, removing non-operation day data, and removing process data other than an electrodialysis process.

The cleaning step may further include detecting and removing at least one initial variable among the initial variables that has a correlation with each other greater than a threshold value through correlation analysis.

The boosting-based AI model may be selected from a group consisting of AdaBoost, Random forest, Catboost, Gradient Boosting Model, Light GBM, and XGBoost.

The preprocessing step may include a first preprocessing step for inputting the first variables into the boosting-based AI model to calculate variable importance for each of the first variables and for obtaining a plurality of second variables through preprocessing based on the variable importance, and permutation importance may be used as the variable importance.

The first preprocessing step may include removing first variables among the first variables of which the permutation importance is less than a preset second threshold.

The preprocessing step may further include a second preprocessing step for inputting the second variables into the boosting-based AI model to obtain a plurality of third variables that satisfy a prediction accuracy greater than or equal to a first threshold with a minimum number, and the second preprocessing step may include calculating the prediction accuracy through Mean Absolute Percentage Error MAPE.

The second preprocessing step may further include calculating variable importance for each of the obtained third variables.

The second preprocessing step may include comparing an accuracy in a case where only one variable having the highest variable importance among the third variables is input to the boosting-based AI model with the prediction accuracy; and determining the third variables as final variables when the prediction accuracy is greater.

The final variables may be selected as any one of conductivity, circulation flow rate, and circulation pressure for any one of lithium sulfate aqueous solution, sulfuric acid, and lithium hydroxide.

Among embodiments, an AI-based lithium concentration prediction device include: a cleaning unit for obtaining a plurality of first variables through preprocessing of a plurality of initial variables used in electrodialysis equipment for producing lithium; a preprocessing unit for inputting the plurality of first variables into a boosting-based AI model to perform preprocessing and for obtaining final variables; and a concentration prediction unit for predicting a concentration of the lithium by inputting the final variables into the boosting-based AI model.

The cleaning unit may remove missing values, removes non-operation day data, and removes process data other than an electrodialysis process.

The cleaning unit may detect and remove at least one initial variable among the initial variables that has a correlation with each other greater than a threshold value through correlation analysis.

The boosting-based AI model may be selected from a group consisting of AdaBoost, Random forest, Catboost, Gradient Boosting Model, Light GBM, and XGBoost.

The preprocessing unit may include a first preprocessing unit that inputs the first variables into the boosting-based AI model to calculate variable importance for each of the first variables and obtains a plurality of second variables through first preprocessing based on the variable importance, and permutation importance may be used as the variable importance.

The first preprocessing unit may remove first variables among the first variables of which the permutation importance is less than a preset second threshold.

The preprocessing unit may further include a second preprocessing unit that inputs the second variables into the boosting-based AI model to obtain a plurality of third variables that satisfy a prediction accuracy greater than or equal to a first threshold with a minimum number, and the second preprocessing unit may calculate the prediction accuracy through Mean Absolute Percentage Error MAPE.

The second preprocessing unit may calculate variable importance for each of the obtained third variables.

The second preprocessing unit may compare an accuracy in a case where only one variable having the highest variable importance among the third variables is input to the boosting-based AI model with the prediction accuracy; and determine the third variables as final variables when the prediction accuracy is greater.

The final variables may be selected as any one of conductivity, circulation flow rate, and circulation pressure for any one of lithium sulfate aqueous solution, sulfuric acid, and lithium hydroxide.

### [ADVANTAGEOUS EFFECTS]

An AI-based lithium concentration prediction method and apparatus according to an embodiment of the present invention may effectively predict lithium concentration with minimal variables by applying a boosting-based AI model in a preprocessing process, performing a first preprocessing of variables based on the importance of each variable according to permutation importance, and performing a second preprocessing of variables based on Mean Absolute Percentage Error MAPE.

### [BRIEF DESCRIPTION OF DRAWINGS]

FIG. 1 is a diagram illustrating a configuration of electrodialysis equipment according to an embodiment of the present invention.
FIG. 2 is a diagram illustrating one stage of electrodialysis equipment according to an embodiment of the present invention.
FIG. 3 is a block diagram illustrating an AI-based lithium concentration prediction device according to an embodiment of the present invention.
FIG. 4 and FIG. 5 are flowcharts illustrating an AI-based lithium concentration prediction method according to an embodiment of the present invention.
FIG. 6 is a diagram illustrating a preprocessing step of an AI-based lithium concentration prediction method according to an embodiment of the present invention.
FIG. 7 is a graph illustrating an effect of an AI-based lithium concentration prediction method according to an embodiment of the present invention.
FIG. 8 is a diagram illustrating a computing device according to an embodiment of the present invention.

### [MODE FOR CARRYING OUT THE INVENTION]

Hereinafter, embodiments of the present invention will be described in detail with reference to the accompanying drawings so that those of ordinary skill in the art to which the present invention pertains may easily implement the same. However, the present invention may be implemented in many different forms and is not limited to the embodiments described herein. In addition, in order to clearly explain the present invention in the drawings, parts irrelevant to the description are omitted, and similar reference numerals are attached to similar parts throughout the specification.

Throughout the specification and claims, when a part is said to "comprise" a certain element, this means that it may further include other elements rather than excluding other elements, unless specifically stated otherwise. Terms including ordinal numbers such as first and second may be used to describe various elements, but the elements are not limited by the terms. The terms are used only for the purpose of distinguishing one element from another.

Terms such as "...unit," "...device," and "module" described in the specification may mean a unit capable of processing at least one function or operation described in this specification, and this may be implemented by hardware or circuitry, software, or a combination of hardware or circuitry and software.

Hereinafter, embodiments of the present invention will be described with reference to the drawings.

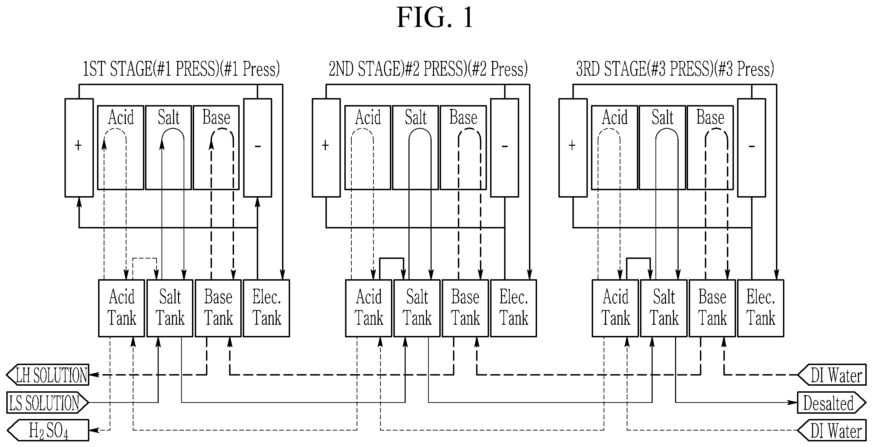

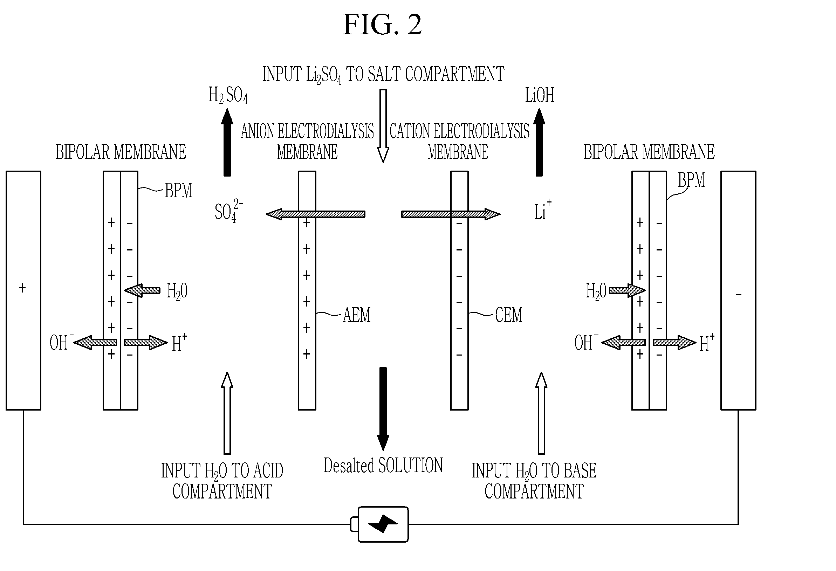

FIG. 1 is a diagram illustrating a configuration of electrodialysis equipment according to an embodiment of the present invention. FIG. 2 is a diagram illustrating one stage of electrodialysis equipment according to an embodiment of the present invention.

In FIG. 1 and FIG. 2, the electrodialysis equipment may be bipolar electrodialysis BPED equipment. That is, the electrodialysis equipment may be bipolar structure electrodialysis equipment. The electrodialysis (BPED) equipment may be equipment for converting lithium sulfate aqueous solution into lithium hydroxide and sulfuric acid. Here, lithium sulfate is Li₂SO₄, lithium hydroxide is LiOH, and sulfuric acid is H₂SO₄. The electrodialysis (BPED) equipment may be aqueous solution treatment equipment that simultaneously performs water splitting and ion separation using an electrodialysis membrane within an electric field.

Referring to FIG. 1 and FIG. 2, the electrodialysis (BPED) equipment may include a cation exchange membrane CEM, an anion exchange membrane AEM, and a bipolar membrane BPM.

The cation exchange membrane CEM has an internal anionic group and may pass only cations (for example, Li⁺). The anion exchange membrane AEM may pass only anions (for example, SO₄²⁻) by internal cationic groups. In the bipolar membrane BPM, a cation membrane and an anion membrane are overlapped with a water splitting catalyst interposed therebetween. The bipolar membrane BPM may split water in the electric field to generate hydrogen ions H⁺ and hydroxide ions OH⁻.

That is, the electrodialysis (BPED) equipment may be aqueous solution treatment equipment that simultaneously performs water splitting (splitting into H⁺, OH⁻) and ion separation (ion separation of Li⁺, SO₄²⁻) using the electrodialysis membranes (the cation exchange membrane, the anion exchange membrane, and the bipolar membrane) within the electric field.

In FIG. 1, in the electrodialysis (BPED) equipment, through a three-stage process (Press) including a first stage to a third stage, LS solution may deliver Li and SO₄ ions to LH solution and sulfuric acid (H₂SO₄) solution. For example, in the electrodialysis (BPED) equipment, deionized DI water may be converted into the LH solution and the sulfuric acid solution while contacting the LS solution in a counter flow. Here, the LS solution is lithium sulfate (Li₂SO₄), and the LH solution is lithium hydroxide (LiOH).

The first to third stage may include a salt compartment, an acid compartment, a base compartment, a salt tank, an acid tank, and a base tank, respectively.

In each stage, the salt compartment may supply lithium sulfate (Li₂SO₄) to produce desalted water after reaction. The acid compartment may supply deionized DI water to produce sulfuric acid (H₂SO₄) after reaction. The base compartment may supply deionized DI water to produce lithium hydroxide (LiOH) after reaction.

The salt tank stores the produced desalted water. The acid tank stores the produced sulfuric acid. The base tank stores the produced lithium hydroxide.

The production yield of the electrodialysis (BPED) equipment is determined according to the output flow rates of the sulfuric acid and lithium hydroxide. The production yield may be determined according to management of an input flow rate of water (H₂O) and an input flow rate of lithium sulfate in the electrodialysis (BPED) equipment, control of current and voltage of a rectifier, and management of a circulation flow rate, a circulation pressure, pH, and conductivity in each compartment. The input flow rate of the solution, current and voltage of the rectifier, pH, conductivity, circulation flow rate, and circulation pressure, which correspond to control elements and management elements, may be detected through internal sensors installed in each compartment. The control elements and management elements may be operational data that affects determining concentrations of produced lithium hydroxide and sulfuric acid.

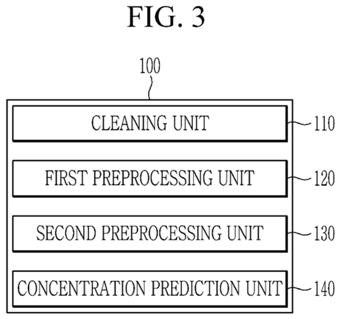

FIG. 3 is a block diagram illustrating an AI-based lithium concentration prediction device according to an embodiment of the present invention.

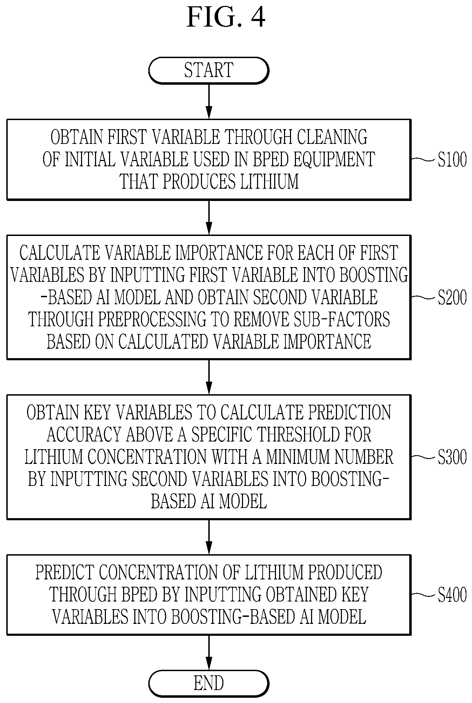

An AI-based lithium concentration prediction device 100 may predict a production concentration of lithium Li through specialized preprocessing of operation data including the control elements and the management elements of electrodialysis (BPED) equipment. The AI-based lithium concentration prediction device 100 may reduce noise and computation amount, quantify the derivation of key factors, and improve accuracy by using a boosting-based AI model in the preprocessing of operation data and prediction of lithium concentration. That is, the AI-based lithium concentration prediction device 100 performs an AI-based lithium concentration prediction method that predicts the production concentration of lithium Li through the specialized preprocessing of operation data using the boosting-based AI model. A detailed description of the AI-based lithium concentration prediction method will be described later in FIG. 4 to FIG. 6.

Referring to FIG. 3, the AI-based lithium concentration prediction device 100 may include a cleaning unit 110, a first preprocessing unit 120, a second preprocessing unit 130, and a concentration prediction unit 140.

The first preprocessing unit 120 and the second preprocessing unit 130 may be collectively referred to as a preprocessing unit. The preprocessing unit may preprocess a plurality of initial variables and obtain final variables. The cleaning unit 110 may obtain a plurality of first variables through preprocessing of the plurality of initial variables used in the electrodialysis (BPED) equipment that produces lithium. The cleaning unit 110 may remove missing values, outliers, redundant data, non-operation day data (sensor data when not operating), and data for processes other than the BPED process from the initial variables including all variables of the BPED process through preprocessing of data cleaning. The cleaning unit 110 may also remove data that moves identically according to correlation analysis per data as the redundant data.

The cleaning unit 110 may obtain first variables whose number is reduced compared to the initial variables through the data cleaning.

The first preprocessing unit 120 may input the first variables into the boosting-based AI model to calculate variable importance for each of the first variables.

The boosting-based AI model may be an AI model using a boosting algorithm. The boosting is a type of machine learning algorithm that combines weak learners to create a strong learner. The boosting methods may be used for classification problems and regression problems. The boosting algorithm sequentially trains models. The boosting algorithm adds a new model that corrects errors of previous models at each step. The boosting algorithm combines all models to generate a final prediction.

The boosting-based AI model may be selected from a group consisting of AdaBoost, Random forest, Catboost, Gradient Boosting Model, Light GBM, and XGBoost. The boosting-based AI model may preferably be the XGBoost.

The AdaBoost (Adaptive Boosting) is one of early stage boosting algorithms, which assigns weights to each data point and trains while giving more weight to misclassified data points.

The Gradient Boosting Machines GBM is a method of training a model in a direction that reduces residuals (errors). The residuals at each step are calculated using a gradient of a loss function.

The XGBoost (Extreme Gradient Boosting) is an extended version of the GBM and includes functions such as regularization, parallel processing, and missing value processing.

The Light GBM is a boosting algorithm specialized for large-scale datasets, and is characterized by fast learning speed and efficient memory use. Like the XGBoost, the Light GBM includes functions of the regularization and parallel processing.

The CatBoost is a boosting algorithm specialized for categorical data, providing automatic categorical feature transformation and fast learning speed.

In the regression problem such as production concentration prediction, the boosting-based AI model prepares data through preprocessing, trains the model, and analyzes performance evaluation and feature importance. When a satisfactory model is obtained through this, the boosting-based AI model predicts the concentration in real-time by applying to an actual environment and is used for production control and optimization.

In this process, the boosting-based AI model may identify which variable has the greatest influence on the production concentration prediction by analyzing the importance of features or variables.

That is, the first preprocessing unit 120 may analyze the variable importance for the first variables through the boosting-based AI model and identify which variable among the first variables has a greater influence on the lithium production concentration prediction.

The first preprocessing unit 120 may use permutation importance to identify the variable importance. The permutation importance is a methodology for estimating feature importance by checking how much the value of a model performance indicator (accuracy, F1-score, R^2, etc.) decreases when a certain feature is excluded from the AI model.

The first preprocessing unit 120 may obtain a plurality of second variables through the first preprocessing based on the calculated variable importance. For example, the first preprocessing unit 120 may remove a first variable among the first variables whose permutation importance is less than a preset specific threshold. That is, the first preprocessing unit 120 may assume that the lower the variable importance according to the permutation importance of each of the first variables, the lower the influence on the performance of the AI model, and may improve performance of the lithium concentration prediction of the AI model by reducing noise in the data by removing variables with lower importance than a specific threshold. The second variables may include variables remaining after removing of the variables whose permutation importance is below the specific threshold (second threshold) among the first variables.

The second preprocessing unit 130 may input the second variables into the boosting-based AI model to obtain a plurality of third variables that satisfy a prediction accuracy greater than or equal to a first threshold with a minimum number.

The boosting-based AI model creates a model with preprocessed data and evaluates performance to improves the prediction performance of the model. In an embodiment, the second preprocessing unit 130 evaluates the performance of the model with the second variables and obtains a third variable having a prediction accuracy greater than a specific threshold as a result of the evaluation. For example, the second preprocessing unit 130 may use evaluation indicators such as MAE, RMSE, and MAPE.

MAE (Mean Absolute Error) is the average of absolute values of each prediction error. RMSE (Root Mean Square Error) is the square root of the average of squares of each prediction error. MAPE (Mean Absolute Percentage Error) is the average of the absolute percentage error, which is a value obtained by dividing the absolute value of each prediction error by the actual value and then taking the average of the whole. That is, it is the percentage ratio of the value obtained by dividing the difference between the actual value and the predicted value by the actual value. The result may be expressed as a percentage. The Mean Absolute Percentage Error (MAPE) is a tool for evaluating prediction accuracy, which is frequently used in regression problems/models and allows intuitive interpretation of prediction results because it represents a relative error ratio.

The second preprocessing unit 130 may calculate prediction accuracy of the AI model using the second variables by using the Mean Absolute Percentage Error, and obtain the third variables included in a set consisting of the minimum number of variables among sets of a plurality of variables whose calculated prediction accuracy satisfies a preset specific threshold (first threshold).

The concentration prediction unit 140 may calculate variable importance for each of the obtained third variables. The concentration prediction unit 140 may compare a prediction accuracy when only one variable with the highest variable importance among the third variables is input to the boosting-based AI model with a prediction accuracy when all the third variables are input. When the prediction accuracy when all the third variables are input is greater than the prediction accuracy when one variable having the highest variable importance is input, the concentration prediction unit 140 may determine the third variables as the final variables and input them to the boosting-based AI model to predict the lithium concentration.

The third variables may be selected as any one of conductivity, circulation flow rate, and circulation pressure for any one of the lithium sulfate aqueous solution, the sulfuric acid, and the lithium hydroxide.

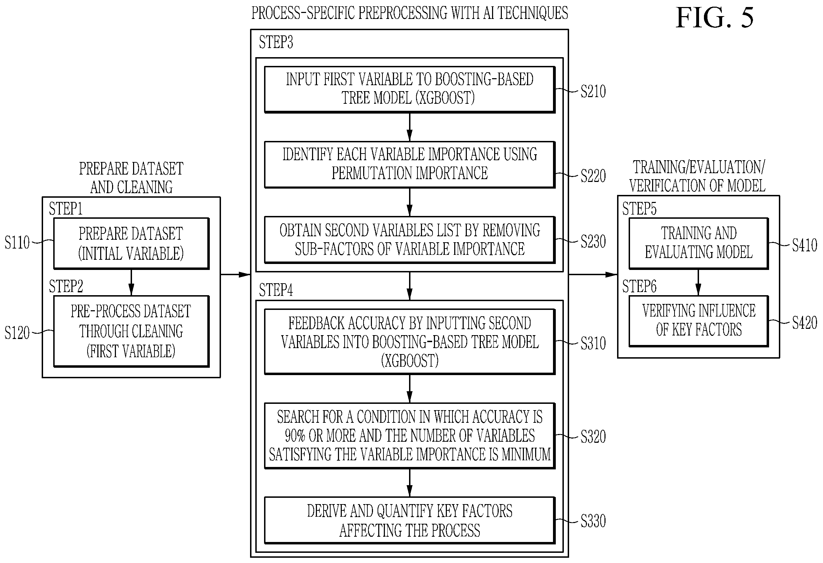

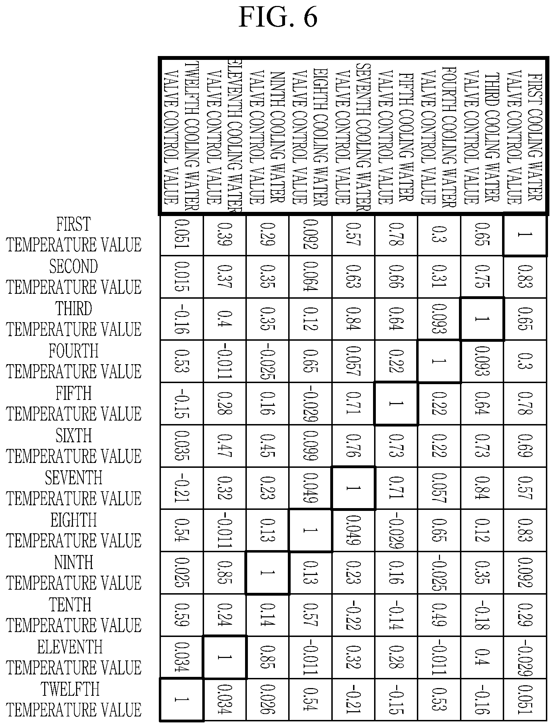

FIG. 4 and FIG. 5 are flowcharts illustrating an AI-based lithium concentration prediction method according to an embodiment of the present invention. FIG. 6 is a diagram illustrating a preprocessing step of an AI-based lithium concentration prediction method according to an embodiment of the present invention. The AI-based lithium concentration prediction method may be performed through the AI-based lithium concentration prediction device (100, see FIG. 3).

In FIG. 4, the AI-based lithium concentration prediction device 100 may obtain a first variable through preprocessing of an initial variable used in the electrodialysis (BPED) equipment that produces lithium (step S100). The initial variable may include BPED operation data. The BPED operation data may include data on control elements and management elements that determine the production results of the electrodialysis (BPED) equipment. In an AI model, the operation data may include features or variables.

For example, the AI-based lithium concentration prediction device 100 may obtain first variables in Table 2 below through preprocessing using data cleaning from the initial variables in Table 1 below. The data cleaning may include removing missing values, outliers, redundant data, non-operation day data (sensor data when not operating), and data for processes other than the BPED process.

**[Table 1]**

| No. | Variable | No. | Variable |
|---|---|---|---|
| 1 | 1^{st} flow rate value | ... | ... |
| 2 | 2^{nd} flow rate value | 384 | 1^{st} coolant valve control value |
| 3 | 3^{rd} flow rate value | 385 | 3^{rd} coolant valve control value |
| 4 | 4^{th} flow rate value | 386 | 4^{th} coolant valve control value |
| 5 | 5^{th} flow rate value | 387 | 5^{th} coolant valve control value |
| 6 | 6^{th} flow rate value | 388 | 7^{th} coolant valve control value |
| 7 | 7^{th} flow rate value | 389 | 8^{th} coolant valve control value |
| 8 | 8^{th} flow rate value | 390 | 9^{th} coolant valve control value |
| 9 | 9^{th} flow rate value | 391 | 11^{th} coolant valve control value |
| 10 | 10^{th} flow rate value | 392 | 12^{th} coolant valve control value |
| ... | ... | ... | ... |
| 26 | 1^{st} temperature value | 517 | 1^{st} stack voltage |
| 27 | 2^{nd} temperature value | 518 | 2^{nd} stack voltage |
| 28 | 3^{rd} temperature value | 519 | 3^{rd} stack voltage |
| 29 | 4^{th} temperature value | 520 | 4^{th} stack voltage |
| 30 | 5^{th} temperature value | 521 | 5^{th} stack voltage |
| 31 | 6^{th} temperature value | 522 | 6^{th} stack voltage |
| 32 | 7^{th} temperature value | 523 | 7^{th} stack voltage |
| 33 | 8^{th} temperature value | 524 | 8^{th} stack voltage |
| 34 | 9^{th} temperature value | 525 | 9^{th} stack voltage |

In Table 1, the total number of initial variables is 525. The initial variables include all missing values, outliers, redundant data, and data with identical correlation. FIG. 6 is a diagram illustrating removing variables through correlation analysis during data cleaning. In FIG. 6, the 1^{st} coolant valve control value, the 3^{rd} to 5^{th} coolant valve control values, the 7^{th} to 9^{th} coolant valve control values, and the 11^{th} and 12^{th} coolant valve control values respectively represent coolant valve control values of a plurality of corresponding sensors. The 1^{st} temperature value to 12^{th} temperature value respectively represent temperature values of the corresponding 1^{st} to 12^{th} sensors. That is, FIG. 6 shows the correlation between the coolant valve control value and the temperature value. Referring to FIG. 6, the 1^{st} coolant valve control value, the 3^{rd} to 5^{th} coolant valve control values, the 7^{th} to 9^{th} coolant valve control values, and the 11^{th} and 12^{th} coolant valve control values, and the 1^{st} temperature value to 12^{th} temperature value respectively represent temperature values and coolant valve control values measured through corresponding sensors within the same equipment.

That is, within the same equipment, the temperature value and the coolant valve control value for the same sensor correspond to actually redundant variables because the correlation is 1. For example, the 1^{st} coolant valve control value and the 1^{st} temperature value measured at the first sensor show a correlation of 1. Therefore, the AI-based lithium concentration prediction device 100 may remove any one of the variables of the 1^{st} coolant valve control value, the 3^{rd} to 5^{th} coolant valve control values, the 7^{th} to 9^{th} coolant valve control values, and the 11^{th} and 12^{th} coolant valve control values, or the 1^{st} temperature value, 3^{rd} to 5^{th} temperature values, 7^{th} to 9^{th} temperature values, and 11^{th} and 12^{th} temperature values through preprocessing of data cleaning.

In addition, the AI-based lithium concentration prediction device 100 may remove variables related to processes other than the BPED process (for example, water level of a tank corresponding to a process following BPED, a total of 86).

**[Table 2]**

| No. | Variable |
|---|---|
| 1 | 1^{st} flow rate value |
| 2 | 2^{nd} flow rate value |
| 3 | 3^{rd} flow rate value |
| 4 | 4^{th} flow rate value |
| 5 | 5^{th} flow rate value |
| 6 | 6^{th} flow rate value |
| 7 | 7^{th} flow rate value |
| 8 | 8^{th} flow rate value |
| 9 | 9^{th} flow rate value |
| 10 | 10^{th} flow rate value |
| ... | ... |
| 394 | 2^{nd} conductivity value |
| 395 | 3^{rd} conductivity value |
| 396 | 4^{th} conductivity value |
| 397 | 5^{th} conductivity value |
| 398 | 6^{th} conductivity value |
| 399 | 7^{th} conductivity value |
| 400 | 8^{th} conductivity value |

In Table 2, the total number of first variables is 400. The first variables include the remaining variables after removing some variables from the initial variables through preprocessing of data cleaning. That is, 125 variables may be removed in the cleaning step. The AI-based lithium concentration prediction device 100 may input the first variable into the boosting-based AI model to calculate the variable importance for each of the first variables, and perform preprocessing to remove sub-factors based on the calculated variable importance to obtain a second variable (step S200). In an embodiment, the AI-based lithium concentration prediction device 100 may calculate the permutation importance for each of the 400 first variables. For example, the AI-based lithium concentration prediction device 100 may obtain the second variables in Table 3, which include the top 100 variables based on the permutation importance among the 400 first variables in Table 2. Here, the top 100 is an arbitrarily determined number and may be adjustably determined.

**[Table 3]**

| No. | Variable |
|---|---|
| 1 | 3^{rd} conductivity value |
| 2 | 8^{th} conductivity value |
| 3 | 11^{th} flow rate value |
| 4 | 3^{rd} flow rate value |
| 5 | 10^{th} flow rate value |
| ... | ... |
| 94 | 4^{th} flow rate value |
| 95 | 19^{th} flow rate value |
| ... | ... |
| 100 | 5^{th} flow rate value |

The AI-based lithium concentration prediction device 100 may input the second variables into the boosting-based AI model to obtain key variables that calculate prediction accuracy above a specific threshold for lithium concentration with a minimum number (step S300). The AI-based lithium concentration prediction device 100 may obtain 4 third variables in Table 4 based on the 100 second variables in Table 2. The third variables are the minimum number of variables capable of predicting the lithium concentration with the prediction accuracy above the specific threshold by being input to the AI model, and may be referred to as the key variables.

**[Table 4]**

| Rank | Variable | Variable importance |
|---|---|---|
| 1 | 3^{rd} conductivity value | 1.034 |
| 2 | 10^{th} flow rate value | 0.424 |
| 3 | 8^{th} flow rate value | 0.39 |
| 4 | 11^{th} conductivity value | 0.361 |

The AI-based lithium concentration prediction device 100 may input the second variables into the boosting-based AI model by subtracting one by one starting from 100 and compare the Mean Absolute Percentage Error (MAPE) for each number of variables. The Mean Absolute Percentage Error may be a threshold for determining the accuracy. The AI-based lithium concentration prediction device 100 may identify variables that satisfy the second threshold of the permutation importance when the prediction accuracy according to the Mean Absolute Percentage Error is greater than a first threshold (for example, 95% or more, 5 or less based on the MAPE) and the number of key variables is minimum. For example, the AI-based lithium concentration prediction device 100 may determine that the case where there are finally 4 key variables in Table 4 is the key variables having the minimum number of high accuracy. The AI-based lithium concentration prediction device 100 may compare the training and evaluation results of the AI model based on the selected 4 key variables with the training and evaluation results of the model based on 1 key variable (for example, the 3^{rd} conductivity value of the third sensor having the highest importance). The AI-based lithium concentration prediction device 100 finally determine 4 key variables when the evaluation result (prediction accuracy) based on the 4 key variables is the best.

The AI-based lithium concentration prediction device 100 may predict the concentration of lithium produced through the BPED by inputting the obtained key variables into the boosting-based AI model (step S400). The AI-based lithium concentration prediction device 100 may predict the lithium concentration with 4 key variables in Table 4.

In an embodiment, the third variables (key variables) may each be selected as any one of conductivity, input flow rate, circulation flow rate, and circulation pressure for any one of the lithium sulfate aqueous solution, sulfuric acid, and lithium hydroxide in the plurality of stages.

For example, the 3^{rd} conductivity value may be the conductivity of the lithium hydroxide of the 1^{st} stage base measured through the third sensor, the 10^{th} flow rate value may be the circulation flow rate of the sulfuric acid of the 2^{nd} stage acid measured through the 10^{th} sensor, the 8^{th} flow rate value may be the circulation flow rate of the 1^{st} stage electrode solution through the 8^{th} sensor, and the 11^{th} conductivity value may be the conductivity of the lithium hydroxide of the 3^{rd} stage base through the 11^{th} sensor. FIG. 5 specifically illustrate an embodiment of FIG. 4. FIG. 5 sequentially shows an example of a preprocessing process of BPED operation data and a lithium concentration prediction process using the boosting-based AI model.

In FIG. 5, first, the AI-based lithium concentration prediction method may include a cleaning step of preparing and cleaning a dataset of the BPED operation data (step S110). The AI-based lithium concentration prediction method obtains first variables by cleaning initial variables (step S120).

Thereafter, the AI-based lithium concentration prediction method may preprocess the first variables using the XGBoost, which is the boosting-based AI model. The AI-based lithium concentration prediction method may input the first variables into the XGBoost (step S210). The AI-based lithium concentration prediction method identifies variable importance of each of the first variables using permutation importance (step S220). The AI-based lithium concentration prediction method obtains second variables by removing sub-factors of the permutation importance (step S230).

Thereafter, the AI-based lithium concentration prediction method obtains feedback on performance through accuracy by inputting the second variables into the XGBoost (step S310). The AI-based lithium concentration prediction method searches for a condition in which the accuracy is 90% or more through an accuracy determination factor such as MAPE and the number of variables satisfying the variable importance is minimum (step S320). The AI-based lithium concentration prediction method derives and quantifies key factors satisfying the above conditions as minimum variables affecting the process (step S330).

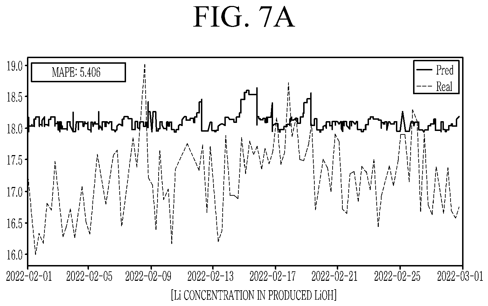

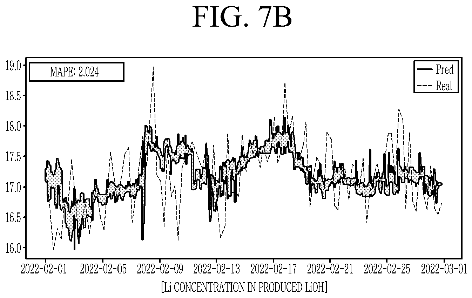

Thereafter, the AI-based lithium concentration prediction method trains and evaluates the AI model with the derived key variables (step S410). The AI-based lithium concentration prediction method may verify the influence of the key factors (key variables) according to the prediction accuracy of the evaluation results (step S420). The influence of the key factors may be verified through the graph of FIG. 7.

FIG. 7 is a graph illustrating an effect of an AI-based lithium concentration prediction method according to an embodiment of the present invention. FIG. 7 is a graph illustrating the change in lithium concentration according to the operation period. FIG. 7a shows a comparative example in a case where one key variable is applied. FIG. 7b shows an embodiment of the present invention in a case where all four key variables are applied.

In FIG. 7a, it may be seen that the actual graph waveform (Real) of the change in lithium concentration is different from the predicted waveform (Pred) of the change in lithium concentration. In the case of prediction (Pred), it is constant at about 18 g/L, whereas in the actual (Real) case, it may be seen that various changes occur between about 16 g/L and about 19 g/L during the operation period. The Mean Absolute Percentage Error (MAPE) also shows 5.406, indicating that the accuracy does not reach 95%.

On the other hand, in FIG. 7b, it may be seen that the actual graph waveform (Real) of the change in lithium concentration is similar to the predicted waveform (Pred) of the change in lithium concentration. It may be seen that the predicted (Pred) and actual (Real) lithium concentrations similarly change from about 16 g/L to about 19 g/L during the operation period. Since the Mean Absolute Percentage Error (MAPE) is 2.021, the accuracy is about 98%, which exceeds the threshold value.

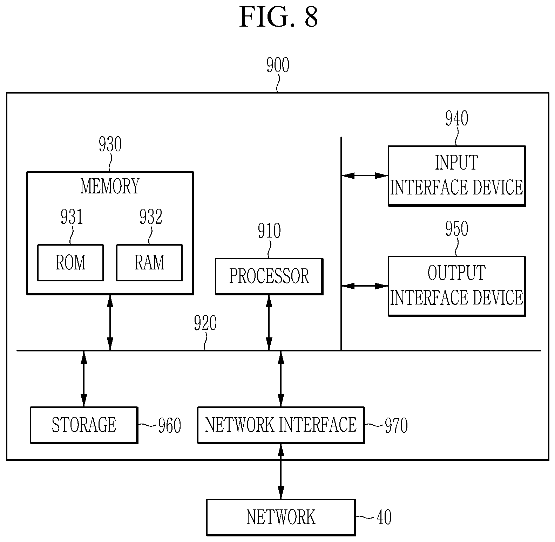

FIG. 8 is a diagram illustrating a computing device according to an embodiment of the present invention.

Referring to FIG. 8, an AI-based lithium concentration prediction method and apparatus according to embodiments may be implemented using a computing device 900.

The computing device 900 may include at least one of a processor 910 communicating through a bus 920, a memory 930, an input interface input device 940, an output interface device 950, and a storage device 560. The computing device 900 may also include a network interface 970 electrically connected to a network 90. The network interface 970 may transmit or receive signals with other entities through the network 90.

The processor 910 may be implemented in various types such as a Micro Controller Unit MCU, an Application Processor AP, a Central Processing Unit CPU, a Graphic Processing Unit GPU, a Neural Processing Unit NPU, etc., and may be any semiconductor device that executes instructions stored in the memory 930 or the storage device 960. The processor 910 may be configured to implement the functions and methods described above with respect to FIGS. 1 to 7.

The memory 930 and the storage device 960 may include various types of volatile or nonvolatile storage media. For example, the memory may include read-only memory ROM 931 and random access memory RAM 932. In this embodiment, the memory 930 may be located inside or outside the processor 910, and the memory 930 may be connected to the processor 910 through various known means.

In some embodiments, at least some configurations or functions of an AI-based lithium concentration prediction method and apparatus according to embodiments may be implemented as a program or software executed in the computing device 900, and the program or software may be stored in a computer-readable medium.

In some embodiments, at least some configurations or functions of an AI-based lithium concentration prediction method and apparatus according to embodiments may be implemented using hardware or circuitry of the computing device 900, or may be implemented as separate hardware or circuitry that may be electrically connected to the computing device 900.

Although the embodiments of the present invention have been described in detail above, the scope of the rights of the present invention is not limited thereto, and various modifications and improvements of those of ordinary skill in the art using the basic concept of the present invention defined in the following claims are also within the scope of the rights of the present invention.

### [Description of Symbols]

100: AI-based lithium concentration prediction device
110: cleaning unit
120: first preprocessing unit
130: second preprocessing unit
140: concentration prediction unit

## Claims

1. An AI-based lithium concentration prediction method, comprising:
a cleaning step for obtaining a plurality of first variables through preprocessing of a plurality of initial variables used in electrodialysis equipment for producing lithium;
a preprocessing step for inputting the plurality of first variables into a boosting-based AI model to perform preprocessing and for obtaining final variables; and
a predicting step for predicting a concentration of the lithium by inputting the final variables into the boosting-based AI model.

2. The AI-based lithium concentration prediction method of claim 1, wherein the cleaning step comprises a data cleaning step for removing missing values, removing non-operation day data, and removing process data other than an electrodialysis process.

3. The AI-based lithium concentration prediction method of claim 2, wherein the cleaning step further comprises detecting and removing at least one initial variable among the initial variables that has a correlation with each other greater than a threshold value through correlation analysis.

4. The AI-based lithium concentration prediction method of claim 1, wherein the boosting-based AI model is selected from a group consisting of AdaBoost, Random forest, Catboost, Gradient Boosting Model, Light GBM, and XGBoost.

5. The AI-based lithium concentration prediction method of claim 1, wherein the preprocessing step includes a first preprocessing step for inputting the first variables into the boosting-based AI model to calculate variable importance for each of the first variables and for obtaining a plurality of second variables through preprocessing based on the variable importance, and
permutation importance is used as the variable importance.

6. The AI-based lithium concentration prediction method of claim 5, wherein the first preprocessing step comprises removing first variables among the first variables of which the permutation importance is less than a preset second threshold.

7. The AI-based lithium concentration prediction method of claim 6, wherein the preprocessing step further comprises a second preprocessing step for inputting the second variables into the boosting-based AI model to obtain a plurality of third variables that satisfy a prediction accuracy greater than or equal to a first threshold with a minimum number, and
the second preprocessing step comprises calculating the prediction accuracy through Mean Absolute Percentage Error MAPE.

8. The AI-based lithium concentration prediction method of claim 7, wherein the second preprocessing step further comprises calculating variable importance for each of the obtained third variables.

9. The AI-based lithium concentration prediction method of claim 8, wherein the second preprocessing step comprises
comparing an accuracy in a case where only one variable having the highest variable importance among the third variables is input to the boosting-based AI model with the prediction accuracy; and
determining the third variables as final variables when the prediction accuracy is greater.

10. The AI-based lithium concentration prediction method of claim 1, wherein the final variables are selected as any one of conductivity, circulation flow rate, and circulation pressure for any one of lithium sulfate aqueous solution, sulfuric acid, and lithium hydroxide.

11. An AI-based lithium concentration prediction device, comprising:
a cleaning unit for obtaining a plurality of first variables through preprocessing of a plurality of initial variables used in electrodialysis equipment for producing lithium;
a preprocessing unit for inputting the plurality of first variables into a boosting-based AI model to perform preprocessing and for obtaining final variables; and
a concentration prediction unit for predicting a concentration of the lithium by inputting the final variables into the boosting-based AI model.

12. The AI-based lithium concentration prediction device of claim 11, wherein the cleaning unit removes missing values, removes non-operation day data, and removes process data other than an electrodialysis process.

13. The AI-based lithium concentration prediction device of claim 12, wherein the cleaning unit detects and removes at least one initial variable among the initial variables that has a correlation with each other greater than a threshold value through correlation analysis.

14. The AI-based lithium concentration prediction device of claim 11, wherein the boosting-based AI model is selected from a group consisting of AdaBoost, Random forest, Catboost, Gradient Boosting Model, Light GBM, and XGBoost.

15. The AI-based lithium concentration prediction device of claim 11, wherein the preprocessing unit includes a first preprocessing unit that inputs the first variables into the boosting-based AI model to calculate variable importance for each of the first variables and obtains a plurality of second variables through first preprocessing based on the variable importance, and
permutation importance is used as the variable importance.

16. The AI-based lithium concentration prediction device of claim 15, wherein the first preprocessing unit removes first variables among the first variables of which the permutation importance is less than a preset second threshold.

17. The AI-based lithium concentration prediction device of claim 16, wherein the preprocessing unit further comprises a second preprocessing unit that inputs the second variables into the boosting-based AI model to obtain a plurality of third variables that satisfy a prediction accuracy greater than or equal to a first threshold with a minimum number, and
the second preprocessing unit calculates the prediction accuracy through Mean Absolute Percentage Error MAPE.

18. The AI-based lithium concentration prediction device of claim 17, wherein the second preprocessing unit calculates variable importance for each of the obtained third variables.

19. The AI-based lithium concentration prediction device of claim 18, wherein the second preprocessing unit compares an accuracy in a case where only one variable having the highest variable importance among the third variables is input to the boosting-based AI model with the prediction accuracy; and
determines the third variables as final variables when the prediction accuracy is greater.

20. The AI-based lithium concentration prediction device of claim 11, wherein the final variables are selected as any one of conductivity, circulation flow rate, and circulation pressure for any one of lithium sulfate aqueous solution, sulfuric acid, and lithium hydroxide.
